Europäisches Patentamt

European Patent Office

Office européen des brevets

(19)

(11) EP 1 500 486 A2

(12) **EUROPEAN PATENT APPLICATION**

(43) Date of publication:
26.01.2005 Bulletin 2005/04

(51) Int Cl.7: **B29C 44/34**, B29C 44/46

(21) Application number: 04017676.0

(22) Date of filing: 26.07.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **24.07.2003 JP 2003279087**

(71) Applicant: **NITTO DENKO CORPORATION
Osaka (JP)**

(72) Inventors:
• **Taruno, Tomohiro
Ibaraki-shi Osaka (JP)**
• **Yamamoto, Takayuki
Ibaraki-shi Osaka (JP)**

(74) Representative: **Grünecker, Kinkeldey,
Stockmair & Schwanhäusser Anwaltssozietät
Maximilianstrasse 58
80538 München (DE)**

(54) **Process for producing polymer foam and polymer foam**

(57)     A process for producing a polymer foam, which comprises (I) a melting step of melting a thermoplastic resin composition by heating, (II) a gas feed step of quantitatively feeding an inert gas into the molten resin composition, (III) a kneading step of mixing and kneading the inert gas and the molten resin composition, (IV) a cooling step of cooling the kneaded material, and (V) a specific expansion step of expanding the cooled kneaded material, wherein a die is used comprising a cell creating section (21) and a foam forming section (31), wherein growth of the created cells and smoothening of the surfaces occur.

*FIG. 1 (c)*

**Description**

FIELD OF THE INVENTION

The present invention relates to a process for producing a polymer foam having a high expansion ratio and an excellent surface appearance and to a polymer foam obtained from the production process. The foregoing polymer foam is useful as, for example, internal insulating materials of electronic instruments, etc., cushioning materials, dustproof materials, sound insulating materials, light shielding materials, heat insulating materials, food packaging materials, clothing materials, and building materials.

BACKGROUND ART

As a process for producing thermoplastic resin expanded bodies, there are known a chemical expansion method using a chemical expanding agent and a physical expansion method (gas expansion method) using a physical expanding agent. The chemical expansion method is in general a method in which a starting resin and an organic expanding agent having a low molecular weigh, which is decomposed at the molding temperature to generate a gas, are mixed, and the mixture is subjected to expansion molding by heating at the decomposition temperature of the expanding agent or higher. This method has such an advantage that not only the gas generation is sharp against the decomposition temperature and the decomposition temperature can be easily adjusted by adding an expansion aid, etc., but also a foam having closed cells can be obtained.

However, since the chemical expansion method uses a special expanding agent, there are encountered problems caused by a decomposition residue of the expanding agent remaining in the foam, such as discoloration of the foam, generation of odors, and a problem of food hygiene. Also, there are problems caused by the chemical expanding agent, such as staining of a molding machine and accompanying molding failure. In particular, in the field of electronic parts applications, a demand for low staining is high so that staining by corrosive gases or impurities becomes problematic.

On the other hand, the physical expansion method is a method in which a low boiling organic compound such as butane, pentane, and dichlorodifluoromethane is fed into a resin having been melted in a molding machine, and after kneading, the kneaded material is subjected to expansion molding by releasing into a low pressure region. Since the low boiling organic compound that is used in this method has affinity with the resin, it is excellent in the solubility and excellent in the maintenance. Accordingly, this physical expansion method has a characteristic feature that a highly foam can be obtained.

However, the most part of expanding agents to be used in the physical expansion method have dangers such as inflammability and toxicity and involve possibility of causing a problem of atmospheric pollution. Also, Fleon based gases including dichlorodifluoromethane go forward the direction of total abolition due to the environmental problem of breakage of the ozone layer.

In order to solve these problems of the conventional art, a number of methods of using an inert gas that is clean and less in costs, such as carbonaceous gas (carbon dioxide) and nitrogen, as an expanding agent have been proposed. However, since the inter gases are low in the affinity with resins, they are poor in the solubility. For this reason, the resulting expanded bodies have a large cell size, are non-uniform and have a small cell density.

Accordingly, there were encountered problems in view of the appearance, mechanical strength, heat insulation, and expansion ratio.

Then, there is developed a technology of obtaining a foam having an extremely fine cell size and a large cell density by using an ultra-critical fluid as an expanding agent and impregnating it with a thermoplastic resin (for example, see JP-T-6-506724 (WO 92/17533)). However, even in the case of using such an ultra-critical fluid as the expanding agent, since its solubility in the thermoplastic resin is low, it is necessary to keep a high pressure for the purpose of producing a polymer foam with a high expansion ratio.

SUMMARY OF THE INVENTION

In this way, in order to keep a high pressure, it is necessary to keep a high pressure between die lips. For achieving this, it is necessary to narrow a gap between the die lips. As a result, it is the present situation that while a thin-walled plate-like polymer foam is easily obtained, it is difficult to produce a thick-walled plate-like polymer foam.

In contrast, for the purpose of producing a polymer foam having a thick thickness, if the gap between the die lips is widened, there occurs a phenomenon in which a high pressure cannot be kept, and therefore, an expanding agent is vaporized within a die, and expansion starts before discharge, the matter of which is called "die internal expansion", so that a polymer foam with a high expansion ratio cannot be produced.

Further, for the purpose of producing a polymer foam with a high expansion ratio, if the gap between the die lips is narrowed, it is known that innumerable "wrinkles" named so-called "corrugations" are generated in the width direction of the polymer foam. Therefore, it was very difficult to produce a polymer foam with a high expansion ratio having an excellent surface appearance.

Accordingly, an object of the invention is to provide a process for producing a polymer foam which can easily produce a polymer foam having an excellent surface appearance and a high expansion ratio and a polymer foam.

For the sake of achieving the foregoing object, the present inventors made extensive and intensive investigations. As a result, it has been found that when a polymer foam is formed using a die having a specific structure, a polymer foam with a high expansion ratio having an excellent surface appearance can be obtained. The invention has been accomplished based on these findings.

Specifically, the invention has the following constitution.

(1) A process for producing a polymer foam, which comprises the following production steps:

(I) a melting step of melting a thermoplastic resin composition by heating,
(II) a gas feed step of quantitatively feeding an insert gas into the molten resin composition,
(III) a kneading step of mixing and kneading the inert gas and the molten resin composition,
(IV) a cooling step of cooling the kneaded material, and
(V) an expansion step of expanding the cooled kneaded material, wherein the expansion step (V) comprises (V-a) a cell creating step of creating cells and (V-b) a foam forming step of performing growth of the formed cells and smoothening of the surfaces thereof.

(2) The process according to the above (1), wherein in the expansion step (V), a die is used in expanding the cooled kneaded material.

(3) The process according to the above (2), wherein the die is an annular die.

(4) The process according to the above (2), wherein the die comprises a cell creating section formed by drawing a resin passage and a foam forming section of performing growth of the created cells and smoothening of the surfaces thereof.

(5) The process according to the above (4), wherein the foam forming section has such a construction that the width continuously increases from the cell creating section side.

(6) The process according to the above (1), wherein a ratio ($G_B/G_A$) of a gap ($G_B$) in the foam forming section to a gap ($G_A$) in the cell creating section is from 2 to 40.

(7) The process according to the above (1), wherein a ratio of a width ($W_a$) in the foam forming section to a width ($W_A$) in the cell creating section is from 1.5 to 10.

(8) A polymer foam obtainable by the process according to the above (1).

(9) A die used in producing a polymer foam, which comprises a cell creating section formed by drawing a resin passage and a foam forming section of performing growth of created cells and smoothening of the surfaces thereof.

(10) A device for producing a polymer foam, which is provided with the die according to the above (9).

According to the process of producing a polymer foam of the invention, it is possible to easily produce a polymer foam having an excellent surface appearance and a high expansion ratio.

BRIEF DESCRIPTION OF THE DRAWINGS

Fig. 1 is an outline view to show one embodiment of a die to be used in the process for producing a polymer foam according to the invention.
Fig. 2 is an outline view to show another embodiment of a die to be used in the process of producing a polymer foam according to the invention.
Fig. 3 is a view to show a photograph concerning the surface shape of the polymer foam obtained in Example 1.

Fig. 4 is an outline view to partially show one embodiment of the conventional annular die.

Fig. 5 is a view to show a photograph concerning the surface shape of the polymer foam obtained in Comparative Example 1.

In Figs., signs 11, 12 each is a die, signs 21, 22 each is a cell creating section, signs 31, 32 each is a foam forming section, signs $G_{A1}$, $G_{A2}$ each is a gap of cell creating section (21, 22), signs $G_{B1}$, $G_{B2}$ each is a gap of foam forming section (31, 32), sign $W_{A1}$ is a width of cell creating section 21, sign $W_{B1}$ is a width of foam forming section 31, sign $D_{A2}$ is a diameter in the outer periphery side of cell creating section 22, sign $D_{B2}$ is a diameter in the outer periphery side of foam forming section 32, sign T is a thickness direction, sign W is a width direction, sign L is a flow direction, and sign X is a resin passage.

DETAILED DESCRIPTION OF THE INVENTION

The invention will be described below in detail with reference to the drawings as needed.

In the process for producing a polymer foam of the invention, a polymer foam is produced using a thermoplastic resin composition containing a thermoplastic resin and an inert gas as an expanding agent and also using an expansion device utilizing the following steps (I) to (V). It is important that the step (V) [expansion step (V)] includes (V-a) a cell forming step of forming cells and (V-b) a foam forming step of performing growth of the formed cells and smoothening of the surfaces thereof.

Step (I): A melting step of melting a thermoplastic resin composition by heating.
Step (II): A gas feed step of quantitatively feeding an inert gas into the molten resin composition.
Step (III): A kneading step of mixing and kneading the inert gas and the molten resin composition.
Step (IV): A cooling step of cooling the kneaded material.
Step (V): An expansion step of expanding the cooled kneaded material.

[Thermoplastic resin]

As the thermoplastic resin, any thermoplastic resins can be used without particular limitations. Examples thereof include various thermoplastic elastomers such as olefin based resins, for example, low-density polyethylene, straight chain polyethylene (linear polyethylene), medium-density polyethylene, high-density polyethylene, copolymers of ethylene or propylene and other $\alpha$-olefin, and polypropylene; styrene based resins, for example, polystyrene and an acrylo-nitrile-butadiene-styrene copolymer (ABS resin); acrylic resins, for example, polymethyl methacrylate; halogen atom-containing polymers, for example, polyvinyl chloride and polyvinyl fluoride; alkenyl aromatic resins; polyamides, for example, polyamide 6, polyamide 66, and polyamide 12; polyesters, for example, polyethylene terephthalate and polybutylene terephthalate; carbonate based resins, for example, bisphenol A based polycarbonates; polyacetals; polyphenylene sulfides; ethylene copolymers, for example, an ethylene-vinyl acetate copolymer, an ethylene-acrylic acid copolymer, an ethylene-acrylic ester copolymer, an ethylene-methacrylic acid copolymer, an ethylene-methacrylic ester copolymer, and an ethylene-vinyl alcohol copolymer; olefin based elastomers, for example, an ethylene-propylene copolymer, an ethylene-propylene-diene copolymer, polybutene, polyisobutylene, and chlorinated polyethylene; styrene based elastomers, for example, a styrene-butadiene-styrene copolymer, a styrene-isoprene-styrene copolymer, a styrene-isoprene-butadiene-styrene copolymer, and hydrogenated polymers thereof; thermoplastic polyester based elastomers; thermoplastic polyurethane based elastomers; and thermoplastic acrylic elastomers. These thermoplastic resins can be used singly or in combinations of two or more thereof.

[Other components]

A variety of additives may be contained in the thermoplastic resin composition, if desired. Such additives are not particularly limited, and examples thereof include vulcanizers, pigments, dyes, surface treating agents, antioxidants, ultraviolet absorbers, antistatic agents, lubricants, nucleating agents, clays, surfactants, and plasticizers. The amount of the additive to be used can be adequately chosen within the range where the cell formation or the like is not hindered.

[Expanding agent (inert gas)]

As the expanding agent (inert gas), any inert gases which are known or commonly used as an expanding agent can be used without particular limitations. From the viewpoint of the environmental protection and in view of obtaining a foam having a small cell size and a high cell density, inert gases (including ultra-critical fluids) such as carbon dioxide, nitrogen, and mixed gases thereof are suitable.

[Melting step (I)]

In the melting step (I), a thermoplastic resin composition is melted by heating, whereby a composition containing the molten thermoplastic resin (molten resin composition) is prepared. As a device utilizing such melting step (I), any devices having the foregoing functions (for example, a resin feed function to feed the thermoplastic resin composition and a resin melting function to melt the thermoplastic resin) can be employed without particular limitations.

Examples thereof include various extruders such as twin-screw extruders, three-screw or multi-screw extruders, single type single-screw extruders, tandem extruders, and three or more single-screw extruders connected to each other. Of these, tandem extruders and three or more single-screw extruders connected to each other can be suitably employed.

Accordingly, the melting step (I) may be a melting step of feeding the thermoplastic resin composition into an extruder and melting the thermoplastic resin in the composition by heating.

In the melting step (I), the heating temperature in melting the thermoplastic resin is not particularly limited and can be adequately chosen depending upon the melting temperature or glass transition temperature of the thermoplastic resin and the like.

[Gas feed step (II)]

In the gas feed step (II), an inert gas is quantitatively fed into the molten resin composition obtained in the foregoing melting step (I). As a device utilizing such gas feed step (II), any devices having the foregoing function (a gas feed function to feed the inert gas) can be employed without particular limitations.

Examples thereof include pumps (gas feed pumps) such as plunger pumps, diaphragm pumps, and buster pumps. In the case of using any pump, it is desired to control the pressure and flow rate.

Incidentally, in the case where an extruder is used in the foregoing melting step (I), the gas feed step (II) is a gas feed step of quantitatively feeding the inert gas into the molten resin composition in the extruder.

In the gas feed step (II), the amount of the inert gas to be fed is not particularly limited and can be adequately chosen depending upon the amount of the thermoplastic resin composition to be used, the desired expansion ratio and expansion cell size, and the like.

[Kneading step (III)]

In the kneading step (III), the inert gas fed in the foregoing gas feed step (II) and the molten resin composition obtained in the foregoing melting step (I) are kneaded and mixed to prepare a kneaded material. As a device utilizing such kneading step (III), any devices having the foregoing function (a kneading function to mix and knead the inert gas and the molten resin composition) can be employed without particular limitations.

Likewise the foregoing melting step (I), for example, various extruders such as twin-screw extruders, three-screw or multi-screw extruders, single type single-screw extruders, tandem extruders, and three or more single-screw extruders connected to each other can be employed. Of these, tandem extruders and three or more single-screw extruders connected to each other can be suitably employed.

Accordingly, the kneading step (III) may be a kneading step of mixing and kneading the inert gas and the molten resin composition by an extruder.

Incidentally, in the kneading step (III), conditions such as the temperature in kneading are not particularly limited.

[Cooling step (IV)]

In the cooling step (IV), the kneaded material obtained in the foregoing kneading step (III) is cooled to prepare a cooled kneaded material. As a device utilizing such cooling step (IV), any devices having the foregoing function (a cooling function of the kneaded material) can be employed without particular limitations. Examples thereof include various extruders such as twin-screw extruders provided with a cooling mechanism, three-screw or multi-screw extruders provided with a cooling mechanism, single type single-screw extruders provided with a cooling mechanism, tandem extruders provided with a cooling mechanism, and three or more single-screw extruders provided with a cooling mechanism, which are connected to each other. Of these, tandem extruders provided with a cooling mechanism and three or more single-screw extruders provided with a cooling mechanism, which are connected to each other, can be suitably employed.

Accordingly, the cooling step (IV) may be a step of cooling the kneaded material by an extruder provided with a cooling mechanism.

In the cooling step (IV), the cooling temperature in cooling the kneaded material is not particularly limited and can be adequately chosen depending upon the kind of the inert gas, the kind of the thermoplastic resin composition, and the like.

Accordingly, the melting step (I) to the cooling step (IV) can be achieved continuously using an extruder provided with not only a cooling mechanism but also a gas feed pump (for example, twin-screw extruders, three-screw or multi-screw extruders, single type single-screw extruders, tandem extruders, and three or more single-screw extruders connected to each other; especially, tandem extruders and three or more single-screw extruders connected to each other).

Incidentally, the pressure within the extruder can be adequately chosen while taking into account the kind of the gas, the operability, and the like. For example, in the case where the gas is carbon dioxide, the pressure within the extruder is from about 5 to 100 MPa, preferably from about 6 to 60 MPa, and more preferably from about 7.4 to 30 MPa.

Also, the temperature within the extruder [the temperature within the extruder in the melting step (I) to the kneading step (III); that is, the temperature of the molten resin composition] varies depending upon the kind of the gas to be used, the glass transition temperature of the thermoplastic resin, and the like and can be chosen over a wide range. In the case of taking into account the operability and the like, the temperature within the extruder is preferably from about 10 to 300 °C.

[Expansion step (V)]

In the expansion step (V), the cooled kneaded material is expanded to prepare a polymer foam (thermoplastic polymer foam). As described previously, it is important that the expansion step (V) includes (V-a) a cell forming step of forming cells and (V-b) a foam forming step of performing growth of the formed cells and smoothening of the surfaces thereof.

In such expansion step (V), a die can be suitably used in expanding the cooled kneaded material. Accordingly, the expansion step (V) may be a step of discharging the cooled kneaded material from a die and expanding it. In this way, the expansion is performed in the expansion step (V), whereby a polymer foam (thermoplastic polymer foam) is prepared.

Incidentally, in the case where in the cooling step (IV), an extruder provided with a cooling mechanism [in particular, in the melting step (I) to the cooling step (IV), an extruder provided with not only a cooling mechanism but also a gas feed pump] is used, the expansion step (V) can be an expansion step of discharging the cooled kneaded material from a die installed in the end portion of the extruder and expanding it. That is, the expansion step (V) can be achieved by a die installed in the end portion of the extruder.

As the foregoing die, dies having various shapes such as flat dies (for example, T-dies, hanger coat dies, and fish-tail dies) and annular dies (cylindrical dies) can be employed. Of these, annular dies are preferable. Examples of the foregoing annular dies include spiderless type annular dies, spider type dies, and spiral type annular dies. As the die, dies having a small pressure loss are preferable. From this viewpoint, spiderless type annular dies are suitable among the annular dies.

Since the expansion step (V) includes (V-a) a cell forming step and (V-b) a foam forming step, the die can be constructed so as to have a cell creating section formed by drawing a resin passage and a foam forming section of performing growth of the formed cells and smoothening of the surfaces thereof. In this way, in the case where the die has a cell creating section and a foam forming section, the cell forming step (V-a) is a step of forming cells in the cell creating section formed by drawing a resin passage in the die; and the foam forming step (V-b) is a step of performing growth of the formed cells and smoothening of the surfaces thereof in the foam forming section of performing growth of the formed cells and smoothening of the surfaces thereof.

In this way, when the cell creating section formed by drawing a resin passage is formed in the die, it is possible to effectively keep or hold the high pressure state until the cell creating section. Moreover, after passing through the cell creating section, the pressure having been kept or held in the high pressure state until the cell creating section is released at a stroke, whereby cells are formed and grown (i.e., expansion is caused).

Incidentally, it is considered that the growth of cells (i.e., expansion) advances basically in the three-dimensional directions (i.e., three directions of a thickness direction, a width direction, and a flow direction). It is considered that in the case where the growth of cells is freely achieved as in the case of using usual dies (for example, in the case where the end portion of the cell creating section is an open end portion), the cells cannot be fully spread in the width direction so that formed expanded bodies (expanded sheets) interfere with each other to generate wrinkles called "corrugations".

However, in the invention, the foam forming section of performing growth of cells and smoothening of the surfaces thereof by restraining the growth of cells (i.e., expansion) to some extent is provided. Therefore, it is possible to form a polymer foam having a smooth surface without generating corrugations. Accordingly, a polymer foam having a high expansion ratio and an excellent surface appearance can be produced.

Specifically, examples of the die having such a construction include dies having constructions shown in Figs.

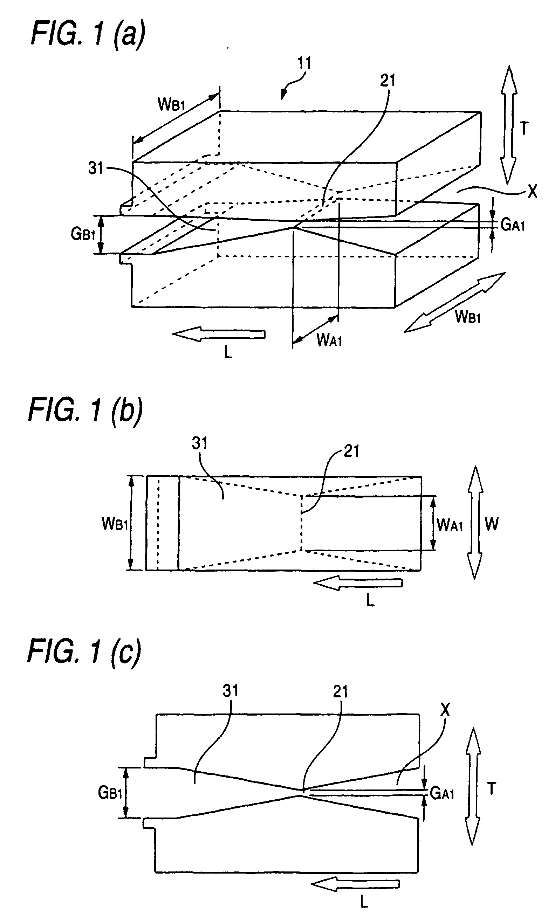

1 to 2. Fig. 1 is an outline view to show one embodiment of a die to be used in the process of producing a polymer foam according to the invention.

Incidentally, Fig. 1(a) is an oblique view; Fig. 1(b) is a top view; and Fig. 1(c) is a side view. In Fig. 1, sign 11 represents a die; sign 21 represents a cell creating section; and sign 31 represents a foam forming section. Also, sign $G_{A1}$ represents a gap of the cell creating section 21, sign $G_{B1}$ represents a gap of the foam forming section 31, sign $W_{A1}$ represents a width of the cell creating section 21, sign $W_{B1}$ represents a width of the foam forming section 31, sign T represents a thickness direction, sign W represents a width direction, sign L represents a flow direction, and sign X represents a resin passage.

In Fig. 1, the die 11 is a flat die and has the cell creating section 21 in the shape that the resin passage X is drawn and the foam forming section 31 of performing growth of created cells and smoothening of the surfaces thereof. The foam forming section 31 has such a construction that the width continuously increases from the side of the cell creating section 21 and has a constant width in the side of the open end portion (end portion opposite to the side of the cell creating section 21). Also, the resin flows in the direction of the flow direction L.

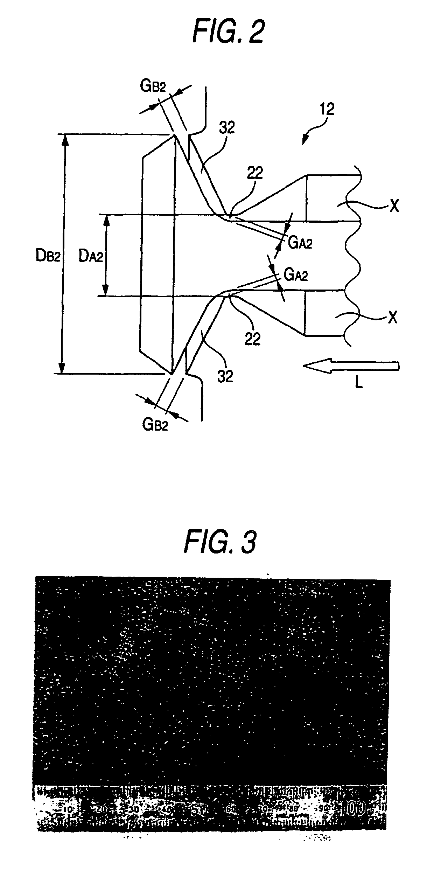

Also, Fig. 2 is an outline view to show another embodiment of a die to be used in the process of producing a polymer foam according to the invention.

In Fig. 2, sign 12 represents a die, sign 22 represents a cell creating section, and sign 32 represents a foam forming section. Also, sign $G_{A2}$ represents a gap of the cell creating section 22, sign $G_{B2}$ represents a gap of the foam forming section 32, sign $D_{A2}$ represents a diameter of the cell creating section 22 (diameter in the outer periphery side), sign $D_{B2}$ represents a diameter of the foam forming section 32 (diameter in the outer periphery side), and sign L and X are the same as described above and represent a flow direction and a resin passage, respectively.

In Fig. 2, the die 12 is an annular die and has the cell creating section 22 in the shape that the resin passage X is drawn and the foam forming section 32 of performing growth of created cells and smoothening of the surfaces thereof. The foam forming section 32 has such a construction that the width continuously increases from the side of the cell creating section 22, and its terminal end has the largest width and is an open end portion (end portion in the opposite side to the side of the cell creating section 21). Also, in the die 12 that is an annular die, a thickness direction T is a direction parallel to the direction from the outer periphery to the inner periphery. On the other hand, a width direction W is a direction parallel to the circumferential direction in the respective site. Moreover, the resin flows in the direction of the flow direction L.

Incidentally, since the die 12 shown in Fig. 2 is an annular die, a width $W_{A2}$ of the cell creating section 22 can be made a length of the circumference in the outer periphery side of the cell creating section 22. Also, a width $W_{B2}$ of the foam forming section 32 can be made a length of the circumference in the outer periphery side of the foam forming section 32. That is, $W_{A2} = \pi \times D_{A2}$, and $W_{B2} = \pi \times D_{B2}$.

In such a die (11, 12; sometimes named generically "1") , the cell creating section (21, 22; sometimes named generically "2") has such a form that the cell creating section is continuously drawn in the both directions of the thickness direction T and the width direction W (i.e., a form in which the lengths in the both directions of the thickness direction T and the width direction W continuously decrease). For this reason, it is possible to effectively keep or hold the high pressure state until the cell creating section 2. Incidentally, the die 1 may have such a form that the cell creating section is drawn in only one direction of the thickness direction T and the width direction W (especially, only in the thickness direction T). Also, though it is preferable that the die has such a form that the cell creating section is continuously drawn, the die may have such a form that the cell creating section is discontinuously drawn.

Also, behind the cell creating section 2, the foam forming section (31, 32; sometimes named generically "3") is provided. Specifically, the foam forming section 3 is provided behind the cell creating section 2 and has such a form that the cell creating section is continuously spread in the both directions of the thickness direction T and the width direction W (i.e., a form in which the lengths in the both directions of the thickness direction T and the width direction W continuously increase). For this reason, after the cooled kneaded material (expanding agent-containing resin composition) has passed through the cell creating section 2, in the foam forming section 3, the pressure kept or held in the high pressure state until the cell creating section 2 is released at a stroke in the three-dimensional directions of the thickness direction T, the width direction W, and the flow direction L (especially, in the two-dimensional directions of the thickness direction T and the width direction W) so that the cells can grow (expand) in the three-dimensional directions (especially, in the two-dimensional directions). In this way, since the high pressure is abruptly released, it is possible to prepare a polymer foam with a high expansion ratio.

Moreover, since the foam forming section 3 is in the state that the growth of cells is restrained to some extent, even when the cells which have also grown in the width direction W do not sufficiently grow and cannot be fully spread, the cells grow in the foam forming section 3 while smoothening the surfaces thereof. Accordingly, it is possible to form a polymer foam having a smooth surface without generating corrugations.

Incidentally, the foam forming section 3 may have such a form that it is spread in only one direction of the thickness direction T and the width direction W (especially, only in the thickness direction T). Also, though it is especially preferable that the cell creating section 3 has such a form that it is continuously spread, the cell creating section 3 has such a form that it is discontinuously spread. It is important that the inner surface of the foam forming section 3 has a flat surface or a smooth curved surface.

The mechanical dimension can be adequately chosen depending upon the mechanical dimension of the cell creating section, the expansion ratio of the polymer foam, the dimension of the desired polymer foam product, and the like.

For example, a ratio $(G_B/G_A)$ of a gap in the foam forming section 3 $(G_{B1}, G_{B2};$ sometimes named generically "$G_B$") to a gap in the cell creating section 2 $(G_{A1}, G_{A2};$ sometimes named generically "$G_A$") is preferably from 2 to 40, and more preferably from 5 to 20. When the $(G_B/G_A)$ ratio is less than 2, the restraint in the thickness direction (restraint in the thickness direction during the growth of cells) becomes strong so that when the foam comes out from the foam forming section 3, it may possibly generate corrugations.

On the other hand, when the $(G_B/G_A)$ ratio exceeds 40, the restraint in the thickness direction cannot be sufficiently achieved so that corrugations may possibly be generated within the foam forming section 3.

Incidentally, as the gap in the cell creating section, the minimum gap of the cell creating section can be employed. Also, as the gap in the foam forming section, the maximum gap of the foam forming section or a gap in the open end portion in the foam forming section (end portion in the side opposite to the cell creating section side) can be employed.

Also, a ratio $(W_B/W_A)$ of a width in the foam forming section 3 $(W_{B1}, W_{B2} (= \pi \times D_{B2}))$ ; sometimes named generically "$W_B$") to a width in the cell creating section 2 $(W_{A1}, W_{A2} (= \pi \times D_{A2}))$ ; sometimes named generically "$W_A$") is preferably from 1.5 to 10, and more preferably from 2 to 5. When the $(W_B/W_A)$ ratio is less than 1.5, the restraint in the width direction (restraint in the width direction during the growth of cells) becomes strong so that when the foam comes out from the foam forming section 3, it may possibly generate corrugations.

On the other hand, in the case where the $(W_B/W_A)$ ratio exceeds 10, the restraint in the width direction cannot be sufficiently achieved so that corrugations may possibly be generated within the foam forming section 3. Also, a dimensional fluctuation in the width direction is caused, and the dimensional accuracy lowers so that it becomes difficult to obtain a polymer foam with a stable dimension.

Incidentally, as the width of the cell creating section, in the case where the die is a flat die, the minimum width of the cell creating section can be employed, and in the case where the die is an annular die, a length of the circumference of the outer periphery side can be employed. Also, as the width in the foam forming section, in the case where the die is a flat die, the maximum width of the foam forming section or a width in the open end portion in the foam forming section (end portion in the side opposite to the cell creating section side) can be employed. Also, in the case where the die is an annular die, the maximum length of the circumference of the outer periphery side in the foam forming section or a length of the circumference of the outer periphery side in the open end portion in the foam forming section (end portion in the side opposite to the cell creating section side) can be employed.

Incidentally, in the invention, the foam forming section may have such a construction that the width is constant in the open end portion side (end portion side in the side opposite to the cell creating section side) as shown in Fig. 1. Also, the foam forming section may have such a construction that the width is continuously spread from the cell creating section side to the open end portion as shown in Fig. 2.

Further, a construction in which nothing is provided between the cell creating section and the foam forming section, the cell creating section is connected directly to the foam forming section, and the width is continuously spread from the cell creating section having the minimum width to form the foam forming section is preferable. However, a cell growing section where cells once grow largely may be formed between the cell creating section and the foam forming section.

In this way, as a device of producing the polymer foam, a manufacturing device of a polymer foam provided with a cell creating section formed by drawing a resin passage and a foam forming section of performing growth of created cells and smoothening of the surfaces thereof can be employed. As a matter of course, the manufacturing device of a polymer foam may be provided with the expansion step (V) including the cell forming step (V-a) and the foam forming step (V-b) by using the foregoing die. A manufacturing device of a polymer foam which is provided with the foregoing melting step (I), gas feed step (II), kneading step (III) and cooling step (IV) together with the expansion step (V) is suitable.

Since the polymer foam of the invention is obtained by the foregoing production process, not only it has a high expansion ratio and has a fine cell size and a large cell density, but also it has a smooth surface and an excellent surface appearance. Also, by adequately choosing the resin, it is also possible to obtain a polymer foam that is excellent in mechanical strength, heat insulation, flexibility, and the like. Accordingly, the polymer foam of the invention is useful as, for example, internal insulating materials of electronic instruments, etc., cushioning materials, dustproof materials, sound insulating materials, light shielding materials, heat insulating materials, food packaging materials, clothing materials, and building materials.

Incidentally, the polymer foam can be subjected to an adequate processing.

EXAMPLES

The invention will be specifically described below with reference to the Examples, but it should not be construed that the invention is limited to these Examples. Incidentally, the expansion ratio was calculated according to the following equation.

$$\text{(Expansion ratio)} = \{[\text{Density before expansion (density of pellets}$$

$$\text{before expansion) (g/cm}^3)] + [\text{Density after expansion (density of foam)}$$

$$(\text{g/cm}^3)]\}$$

Example 1

50 parts by weight of polypropylene having a density of 0.9 g/cm$^3$ and a melt flow rate (at 230 °C) of 0.4 g/ 10 min, 50 parts by weight of an ethylene-propylene copolymer based elastomer having a JIS-A hardness of 69, and 10 parts by weight of magnesium hydroxide having a mean particle size of 1 μm were kneaded using a twin-screw kneading extruder and palletized by extrusion.

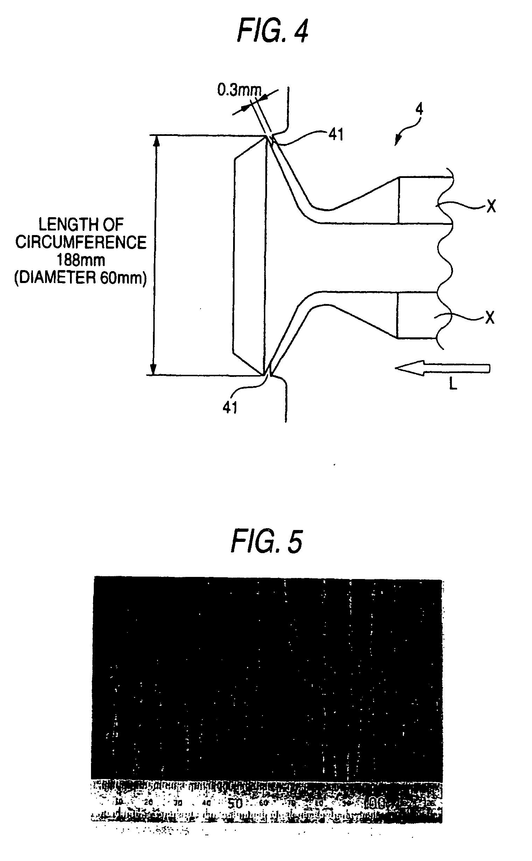

The resulting pellets were subjected to extrusion molding (expansion molding) using a tandem extruder (φ65 - φ75) provided with an annular die (cylindrical die) shown in Fig. 2, to obtain a polymer foam shown in Fig. 3. The appearance (especially, the surface appearance) of this polymer foam was visually observed. As a result, no corrugation was observed, and the appearance was good. Also, the polymer foam had an expansion ratio of 23 times and had a high expansion ratio.

Incidentally, Fig. 3 is a view to show a photograph concerning the surface shape of the polymer foam obtained in Example 1.

Incidentally, carbon dioxide was used as an expanding agent and fed under pressure into the first-stage extruder. The operation condition is such that the temperature in the extruder is from 200 to 240 °C; the pressure in the extruder is from 15 to 20 MPa; the temperature of the resin in the die is 174 °C; the die pressure is 10 MPa; and the treatment amount is 50 kg/hr.

Also, with respect to the shape of the annular die as used, the gap ($G_A$) in the cell creating section is 0.3 mm; the gap ($G_B$) in the foam forming section is 4.0 mm; the width ($W_A$, $= \pi \times D_{A2}$) in the cell creating section is 62 mm; and the width ($W_B = \pi \times D_{B2}$) in the foam forming section is 188 mm.

Example 2

50 parts by weight of polypropylene having a density of 0.9 g/cm$^3$ and a melt flow rate (at 230 °C) of 0.5 g/ 10 min, 50 parts by weight of an ethylene-propylene copolymer based elastomer having a JIS-A hardness of 69, and 50 parts by weight of magnesium hydroxide having a mean particle size of 1 μm were kneaded using a twin-screw kneading extruder and palletized by extrusion.

The resulting pellets were subjected to extrusion molding (expansion molding) using a tandem extruder (φ65 - φ75) provided with an annular die (cylindrical die) shown in Fig. 2, to obtain a polymer foam. The appearance (especially, the surface appearance) of this polymer foam was visually observed. As a result, no corrugation was observed, and the appearance was good. Also, the polymer foam had an expansion ratio of 17 times and had a high expansion ratio.

incidentally, carbon dioxide was used as an expanding agent and fed under pressure into the first-stage extruder. The operation condition is such that the temperature in the extruder is from 200 to 240 °C; the pressure in the extruder is from 15 to 20 MPa; the temperature of the resin in the die is 174 °C; the die pressure is 10 MPa; and the treatment amount is 50 kg/hr.

Also, with respect to the shape of the annular die as used, the gap ($G_A$) in the cell creating section is 0.3 mm; the gap ($G_B$) in the foam forming section is 2.5 mm; the width ($W_A = \pi \times D_{A2}$) in the cell creating section is 62 mm; and the width ($W_B = \pi \times D_{B2}$) in the foam forming section is 188 mm.

Comparative Example 1

A polymer foam was formed in the same manner as in Example 1, except for using a tandem extruder provided with the conventional annular die shown in Fig. 4 in place of the tandem extruder provided with an annular die shown in Fig. 2. As a result, a polymer foam having a number of corrugations generated therein was obtained as shown in Fig. 5.

Accordingly, the surface appearance of the polymer foam was poor. Also, the resin expanded bond had an expansion ratio of 11 times. Incidentally, Fig. 5 is a view to show a photograph concerning the surface shape of the polymer foam obtained in Comparative Example 1.

Fig. 4 is an outline view to partially show one embodiment of the conventional annular die. The conventional annular die shown in Fig. 4 does not have a foam forming section. Specifically, the conventional die 4 shown in Fig. 4 has such a construction that the back of the cell creating section 41 is opened (the terminal end of the cell creating section 41 is an open end portion). Incidentally, in the conventional annular die shown in Fig. 4, the gap in the cell creating section 41 is 0.3 mm; and the width (length of the circumference in the outer periphery side) in the cell creating section is 188 mm (diameter in the outer periphery side: 60 mm).

Comparative Example 2

A polymer foam was formed in the same manner as in Comparative Example 1, except for using an annular die having a gap in the cell creating section 41 shown in Fig. 4 of 0.5 mm. As a result, no expansion occurred after the cell creating section 41, and the surface appearance of the polymer foam was poor. Moreover, the expansion ratio of the polymer foam was small as 1.5 times.

Incidentally, the shape of the die used in each of Examples 1 to 2 and Comparative Examples 1 to 2 and the polymer foam obtained in each of Examples 1 to 2 and Comparative Examples 1 to 2 are shown in Table 1.

Table 1

| | | Example 1 | Example 2 | Comparative Example 1 | Comparative Example 2 |
|---|---|---|---|---|---|
| Die | | | | | |
| Gap ($G_A$) in the cell creating section | mm | 0.3 | 0.3 | 0.3 | 0.5 |
| Gap ($G_B$) in the foam forming section | mm | 4.0 | 2.5 | - | - |
| $G_B/G_A$ | | 13 | 8.3 | - | - |
| Width ($W_A$) in the cell creating section | mm | 62 | 62 | 188 | 188 |
| Width ($W_B$) in the foam forming section | mm | 188 | 188 | - | - |
| $W_B/W_A$ | | 3 | 3 | - | - |
| Polymer foam | | | | | |
| Surface appearance | | Good | Good | Poor | Poor |
| Expansion ratio | times | 23 | 17 | 11 | 1.5 |

It is noted from Table 1 that according to the process of producing a polymer foam regarding the Examples, since a die having a cell creating section formed by drawing a resin passage and a foam forming section of performing growth of the formed cells and smoothening of the surfaces thereof is used as the die, it is possible to obtain a polymer foam that is safety and less in a load against the environment and that has a high expansion ratio and a smooth surface free from corrugations.

While the invention has been described in detail and with reference to specific embodiments thereof, it will be apparent to one skilled in the art that various changes and modifications can be made therein without departing from the scope thereof.

This application is based on Japanese patent applications No. 2003-279087 filed on July 24, 2003, the entire contents thereof being hereby incorporated by reference.

**Claims**

1.  A process for producing a polymer foam, which comprises the following production steps:

    (I) a melting step of melting a thermoplastic resin composition by heating,
    (II) a gas feed step of quantitatively feeding an inert gas into the molten resin composition,
    (III) a kneading step of mixing and kneading the inert gas and the molten resin composition,
    (IV) a cooling step of cooling the kneaded material, and
    (V) an expansion step of expanding the cooled kneaded material, wherein the expansion step (V) comprises (V-a) a cell creating step of creating cells and (V-b) a foam forming step of performing growth of the formed cells and smoothening of the surfaces thereof.

2.  The process according to claim 1, wherein in the expansion step (V), a die is used in expanding the cooled kneaded material.

3.  The process according to claim 2, wherein the die is an annular die.

4.  The process according to claim 2, wherein the die comprises a cell creating section formed by drawing a resin passage and a foam forming section of performing growth of the created cells and smoothening of the surfaces thereof.

5.  The process according to claim 4, wherein the foam forming section has such a construction that the width continuously increases from the cell creating section side.

6.  The process according to claim 1, wherein a ratio ($G_B/G_A$) of a gap ($G_B$) in the foam forming section to a gap ($G_A$) in the cell creating section is from 2 to 40.

7.  The process according to claim 1, wherein a ratio of a width ($W_B$) in the foam forming section to a width ($W_A$) in the cell creating section is from 1.5 to 10.

8.  A polymer foam obtainable by the process according to claim 1.

9.  A die used in producing a polymer foam, which comprises a cell creating section formed by drawing a resin passage and a foam forming section of performing growth of created cells and smoothening of the surfaces thereof.

10. A device for producing a polymer foam, which is provided with the die according to claim 9.

FIG. 1 (a)

FIG. 1 (b)

FIG. 1 (c)

## FIG. 2

## FIG. 3

# FIG. 4

0.3mm

41

4

LENGTH OF
CIRCUMFERENCE
188mm
(DIAMETER 60mm)

X

X

41

L

# FIG. 5